# EUROPEAN PATENT SPECIFICATION

(11) **EP 1 564 078 B1**
(45) Date of publication and mention of the grant of the patent: **15.11.2006**
(21) Application number: 05007789.0
(22) Date of filing: 07.08.2001
(51) Int. Cl.: B60R 16/02, F16L 5/10, H02G 3/22

(54) **A grommet**
Dichtungstülle
Manchon d'étanchéité

(30) Priority: 29.09.2000 JP 2000300757
(43) Date of publication of application: 17.08.2005
(62) Divisional of application: 01118758.0
(73) Proprietor: Sumitomo Wiring Systems, Ltd., Yokkaichi-City, Mie, 510-8503 (JP)
(72) Inventor: Hashimoto, Takashi, Yokkaichi-city Mie 510-8503 (JP)
(74) Representative: Müller-Boré & Partner Patentanwälte

(56) References cited:
- EP-A- 0 580 130
- EP-A- 1 013 508
- JP-U- 3 040 823
- US-A- 5 608 191

## Description

The present invention relates to a grommet and particularly to a grommet to be assembled into a wiring harness to be arranged in an automotive vehicle and mounted in a through hole formed in a body panel to protect the wiring harness and make a portion where the wiring harness is introduced into the through hole waterproof and dustproof.

Conventionally, a grommet has been mounted on a wiring harness to be arranged from an engine compartment to a passenger compartment of an automotive vehicle and mounted in a through hole formed in a body panel partitioning the engine compartment and the passenger compartment to protect the wiring harness introduced into the through hole and protect the passenger compartment from entrance of water, dust and sound from the engine compartment.

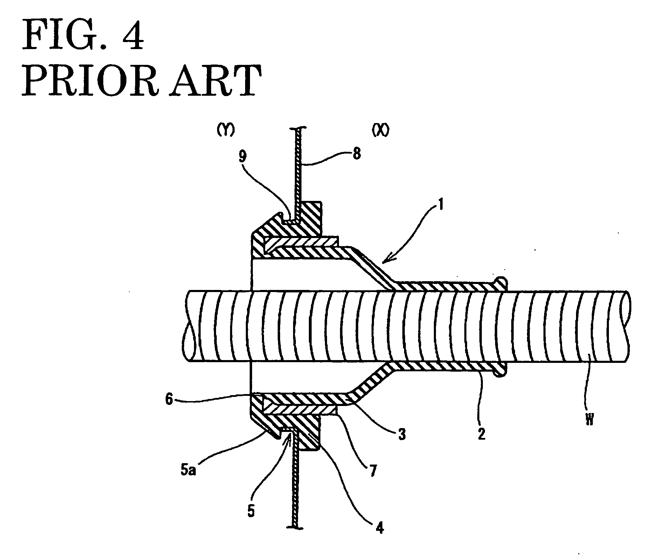

As a grommet of this type is known a so-called "one-motion grommet" which is provided at its outer periphery with a body locking recess to be engaged with the surrounding edge of a through hole of a body panel only by pushing the grommet into the through hole in one direction. An advantage of the one-motion grommet is a good mountability. For example, a one-motion grommet shown in FIG. 4 is disclosed in Japanese Unexamined Utility Model Publication No. 3-40823.

The grommet 1 is formed such that a large-diameter tube portion 3 is continuous with a small-diameter tube portion 2 through which a bundle of wires W are introduced in close contact, a body locking recess 5 is formed in the outer circumferential surface of a stepped thick portion 4 formed on the outer circumferential surface of the large-diameter tube portion 3, a slit 6 is formed in the thick portion 4 and an annular metallic core 7 is pressed into the slit 6.

The grommet 1 is pushed into a through hole 9 formed in a body panel 8 in a direction of arrow Q from an engine compartment (X) side to a passenger compartment (Y) side with no annular metallic core 7 inserted into the slit 6, a surrounding edge of the through hole 9 is engaged in the body locking recess 5 by elastically deforming a slanted wall 5a of the body locking recess 5 inwardly, and the annular metallic core 7 is pressed into the slit 6 after the engagement lest the grommet 1 should come off into the engine compartment side.

Since the body locking recess 5 formed in the thick portion 4 has a low elastic locking force in the grommet 1, a problem of likeliness to come off into the engine compartment side is solved using the annular metallic core 7 which is a separate member. Thus, two parts, i.e. the grommet and the annular metallic core are needed, and an additional operation step of assembling the annular metallic core 7 after the grommet 1 is mounted is required.

Further, the large-diameter portion 3 largely spaced apart from the wiring harness is provided in order to elastically deform the slanted wall 5a at the insertion side of the body locking recess 5 inwardly when the grommet 1 is mounted into the through hole. Thus, a through hole larger than the outer diameter of the wiring harness to be introduced needs to be formed in the body panel. It is preferable to minimize the through hole formed in the body panel for the soundproof purpose. However, the through hole needs to be made larger in the case of using the grommet.

Said JP 03 040823 U discloses a grommet having the features according to the preamble of claim 1.

EP-A-0 580 130 discloses a lead-wire grommet comprising a rubber-made inner member having an insertion hole through which the lead wire is passed and a slit through which the lead wire is set into the insertion hole. The grommet further comprises a rubber-made outer member having a retention hole in which the inner member is retained and an engagement groove at which the outer member is tightly fitted on the edge of the opening in the wall. As a result, retaining the inner member as tightly fitted in the retention hole in the outer member causes the walls of the slit in the inner member to closely fit each other, thereby providing a higher water-tightness of the structure.

In view of the above problems, an object of the present invention is to enable a grommet to be firmly and easily mounted on a body panel, in particular without using a separate member and to enable a through hole formed in the body panel to be made smaller.

This object is solved according to the invention by a grommet according to claim 1. Preferred embodiments are subject of the dependent claims.

According to the invention, there is provided a grommet being insertable into a through hole formed in a panel in an insertion direction to be engaged with the through hole while being mounted on a wiring harness, comprising:
a small-diameter tube portion through which a bundle of wires can be introduced in substantially close contact; a jaw portion;
a body locking recess formed in a slanted outer circumferential surface of the jaw position;
wherein the jaw portion is projecting in a fold-back direction from the outer circumference of the front end of the small-diameter tube portion, and
the jaw portion comprises at least one thinned wall portion which allows a substantially radial movement of the jaw portion towards the small-diameter tube portion upon insertion of the grommet into the through hole;
and wherein a clearance is defined between the small-diameter portion and the jaw portion, a front end portion of the clearance being located more forward than the body locking recess in the insertion direction characterized in that the outer circumferential surface of the small-diameter tube portion is slanted outwardly so that the clearance is tapered toward its front end position.

Thus, by providing the thinned wall portion at the jaw portion an easy deflection of the jaw portion is possible so that the grommet can be easily and firmly inserted into the through hole of the panel.

The jaw portion is slanted while gradually increasing its outer diameter toward the back and wherein the body locking recess is formed in the slanted outer circumferential surface of the jaw portion.

The jaw portion formed with the body locking recess is folded back outwardly from the front end of the small-diameter tube portion to be inserted, thereby giving a forward acting elastic force to the jaw portion itself. Thus, the body locking recess formed in the outer circumferential surface of the jaw portion is firmly engaged with the body panel and the grommet does not come off into the engine compartment located at the back side. Therefore, a metallic core which is required for the prior art grommet in order to prevent the grommet from coming off is not required.

Further, at the time of mounting the grommet onto the body panel, a large clearance is defined between the jaw portion formed with the body locking recess and the small-diameter tube portion, and the front end of this clearance is located more forward than the body locking recess to thin a portion of the jaw portion facing the front end of this clearance. Thus, the jaw portion is easily deformable about this thinned portion, thereby easily deforming the front slanted wall of the body locking recess to pass the through hole.

Since the jaw portion formed with the body locking recess is easily deformable, the tube portion through which the bundle of wires are introduced need not be formed with a large-diameter tube portion unlike the prior art, and it is sufficient to provide the jaw portion folded back from the leading end of the small-diameter tube portion through which the bundle of wires are introduced in close contact.

Preferably in the above grommet, the inner circumferential surface of the front side of the small-diameter tube portion is so slanted as to gradually increase its diameter toward the front end, so that an inner clearance between the bundle of wires and the front side of the small-diameter tube portion is gradually increased.

If the small-diameter tube portion and the bundle of wires are spaced apart at the front side and the portion of the small-diameter portion continuous with the jaw portion is thinned, the jaw portion is easily deformable, thereby further reducing a force required to insert the grommet. Further, this inner clearance advantageously enables the direction of the bundle of wires coming out from the small-diameter tube portion to be easily changed in the case that they need to be bent in a desired direction.

According to the invention, a clearance is defined between the small-diameter portion and the jaw portion, wherein, the outer circumferential surface of the small-diameter tube portion is slanted outwardly so that the clearance is tapered toward its front end position.

Most preferably, the thinned wall portion is provided at a radial position substantially corresponding the edge of the through hole of the panel.

An outer diameter of at least part of a circumferential extension (preferably of the full circumferential extension) of a bottom portion of the body locking recess is slightly larger than an inner diameter of the through hole of the panel. Thus a sealing and/or holding function of the grommet can be enhanced.

These and other objects, features and advantages of the present invention will become apparent upon reading of the following detailed description of preferred embodiments and accompanying drawings in which:
FIG. 1 is a section of a grommet according to one embodiment of the invention,
FIG. 2 is a section showing the grommet having a wiring harness introduced therethrough and mounted on a body panel,

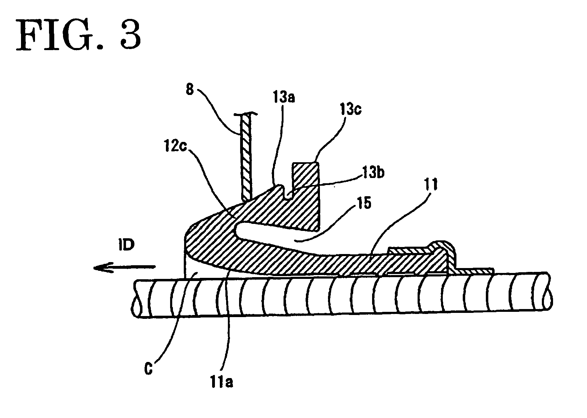

FIG. 3 is a diagram showing an action when the grommet is introduced into a through hole formed in the body panel, and
FIG. 4 is a section showing a prior art grommet.

Hereinafter, one preferred embodiment of the present invention is described with reference to the accompanying drawings.

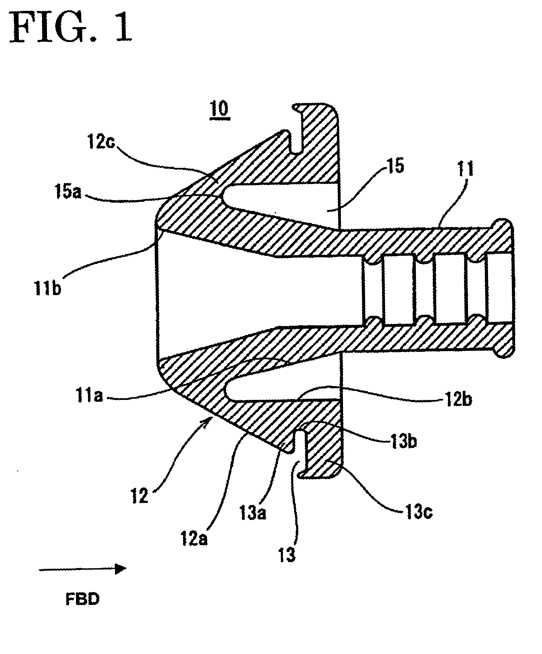

As shown in FIG. 1, a grommet 10 of this embodiment is integrally or unitarily molded of a resilient material, preferably a rubber or elastomer, and is formed such that a jaw portion 12 projects in a fold-back direction FBD from the outer circumference of the front end of a small-diameter tube portion 11 through which a bundle of wires W are or can be at least partly introduced in substantially close contact. The small-diameter tube portion 11 is inserted or insertable into a through hole 9 formed e.g. in a body panel 8 in an insertion direction ID preferably from its front end. The jaw portion 12 is so slanted or tapered that its outer diameter increases toward the back, and a body locking recess 13 is formed in a slanted outer circumferential surface 12a of the jaw portion 12.

The body locking recess 13 is defined by a front slanted wall 13a which is part of the slanted outer circumferential surface 12a of the jaw portion 12 and a thick rear vertical wall 13c which projects and is substantially opposed to the front slanted wall 13a while forming a groove or recess 13b therebetween.

A clearance or recess or interspace 15 is defined between an inner circumferential surface 12b of the jaw portion 12 folded back from the front end of the small-diameter tube portion 11 and an outer circumferential surface 11 a of the small-diameter tube portion 11. Thus, the clearance 15 has the appearance of a tubular blind hole being arranged in the longitudinal direction. A front end position 15a of the clearance 15 is located more forward than the body locking recess 13 along the longitudinal direction of the grommet 10 or in the insertion direction ID. In other words, the front end position 15a of the clearance 15 is located axially spaced from the recess or groove 13 in the insertion direction ID. The clearance is tapered toward its front end position 15a since preferably the inner circumferential surface thereof (outer circumferential surface 11 a of the small-diameter tube portion 11) is slanted outwardly. The front end 15a of the clearance 15 faces a base end position or portion of the front slanted wall 13a of the jaw portion 12, making this base end position or portion into a thinned portion 12c. Accordingly, the jaw portion 12 comprises at least one thinned wall portions 12c which allow an easy deformation of the grommet 10 e.g. upon insertion thereof into the through hole 9.

At the front side of the small-diameter tube portion 11 is provided a slanted portion 11 b whose inner diameter gradually increases toward the front end, thereby widening a hollow portion of the small-diameter tube portion 11. The slanted portion 11 b is preferably made substantially parallel to the outer circumferential surface 11 a lest the front part of the small-diameter tube portion 11 continuous with the jaw portion 12 should become thick. By widening the front end of the hollow portion of the small-diameter tube portion 11, a clearance C is defined between the outer surface of the wire bundle W introduced and the front end of the inner circumferential surface of the small-diameter tube portion 11.

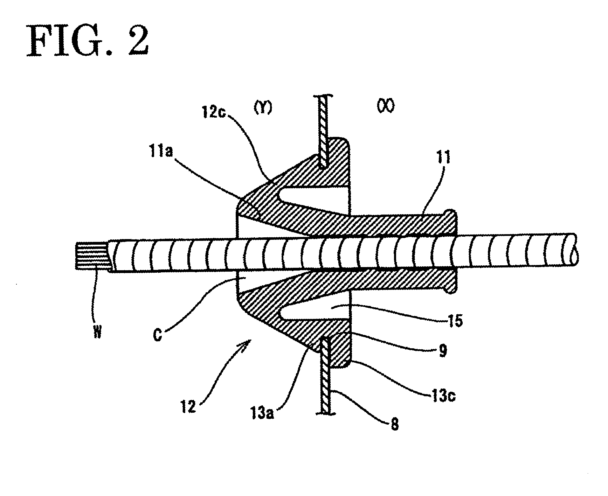

A grommet mounting operation of mounting the thus formed grommet 10 on a wiring harness W/H as shown in FIG. 2 and pushing it into the through hole 9 formed in the body panel 8 from an engine compartment (X) to a passenger compartment (Y) is described below.

When the small-diameter tube portion 11 of the grommet 10 is pushed into the through hole 9, the base end portion 12c of the slanted wall 13a of the body locking recess 13 formed in the outer circumferential surface of the jaw portion 12 preferably substantially comes into contact with the body panel 8. Since the jaw portion 12, in particular the base end portion 12c thereof is thinned, it is easily deformed upon coming into contact with the body panel 8, thereby deforming a portion of the jaw portion 12 behind the body locking recess 13 toward the clearance 15. At this stage, a portion of the jaw portion 12 substantially continuous with the small-diameter tube portion 11 assists this deformation since this portion is preferably not thick, either.

Since the jaw portion 12 is easily deformable, the slanted wall 13a passes the through hole 9 and the inner surface of the through hole 9 is fitted into the groove 13b of the body locking recess 13. In this state, the jaw portion 12 is elastically or resiliently restored upon being released from a pushing force from the body panel 8, and the body panel 8 is tightly held between the slanted wall 13a and the vertical wall 13c at the opposite sides of the groove 13b. At this time, since being folded back from the front end of the small-diameter tube portion 11, the jaw portion 12 is biased substantially forward and the vertical wall 13c at the rear side of the body locking recess 13 is elastically pressed against the body panel 8. Furthermore, the outer diameter of the bottom of the groove 13b is slightly larger (e.g. 32.5 mm) than the inner diameter of the through hole 9 of the panel 8 (e.g. 32 mm) so that (additionally) a substantially radial or outward force acting on the jaw portion 12 enhances the sealing and/or holding function of the jaw portion 12 against or on the panel 8.

Further, since the clearance C is defined between the wire bundle W introduced through the grommet 10 mounted in the through hole 9 of the body panel 8 and the front end side of the small-diameter tube portion 11, the jaw portion 12 is easily deformable, reducing a force required to insert the grommet 10.

Even after the grommet 10 is mounted on the body panel 8, the wire bundle W can be easily curved in a desired direction at its position coming out from the grommet 10, facilitating the arrangement of the wiring harness W/H.

As is clear from the above description, the preferred grommet is formed such that the jaw portion formed with the body locking recess is folded back from the front end of the small-diameter tube portion through which the wire bundle is introduced in close contact. Thus, at the time of mounting the grommet on the vehicle body, the jaw portion can be easily deformed when the body panel comes into contact with the slanted wall of the body locking recess. As a result, the grommet can be mounted on the vehicle body with a low insertion force.

Further, since a forward acting elastic or resilient force can be given to the jaw portion formed with the body locking recess even after the grommet is mounted on the vehicle body, the vertical wall at the rear side of the body locking recess can be pressed against the body panel, thereby securely preventing the grommet from coming off into the rear side.

Furthermore, since the jaw portion projects from the front end of the small-diameter tube portion without providing a large-diameter tube portion continuous with the small-diameter tube portion, the grommet can be made smaller. As a result, the through hole formed in the vehicle body can be made smaller.

Further, since the clearance is defined between the front end of the small-diameter tube portion and the wire bundle, the deformation of the jaw portion during mounting of the grommet can be assisted, thereby reducing the grommet inserting force. There is an additional advantage of making the wire bundle easily bendable.

### LIST OF REFERENCE NUMERALS

- 8: body panel
- 9: through hole
- 10: grommet
- 11: small-diameter tube portion
- 11b: slanted portion
- 12: jaw portion
- 12c: thinned portion (at the base end of a slanted wall)
- 13: body locking recess
- 13a: slanted wall
- 13b: groove
- 13c: vertical wall
- 15: clearance
- W/H: wiring harness
- W: wire bundle

## Claims

1. A grommet (10) being insertable into a through hole (9) formed in a panel (8) in an insertion direction (ID) to be engaged with the through hole (9) while being mounted on a wiring harness comprising:
a small-diameter tube portion (11) through which a bundle of wires (W) can be introduced in substantially close contact;
a jaw portion (12) ;
a body locking recess (13) formed in a slanted outer circumferential surface (12a) of the jaw portion (12) ;
wherein the jaw portion (12) is projecting in a fold-back direction (FBD) from the outer circumference of the front end of the small-diameter tube portion (11) and the jaw portion (12) comprises at least one thinned wall portion (12c) which allows a substantially radial movement of the jaw portion (12) towards the small-diameter tube portion (11) upon insertion of the grommet (10) into the through hole (9) and
wherein a clearance (15) is defined between the small-diameter portion (11) and the jaw portion (12), a front end portion (15a) of the clearance (15) being located more forward than the body locking recess (13) in the insertion direction (ID)
**characterized in that**
the outer circumferential surface (11 a) of the small-diameter tube portion (11) is slanted outwardly so that the clearance (15) is tapered toward its front end position (15a).

2. A grommet according to claim 1, wherein the thinned wall portion (12c) is provided at a radial position substantially corresponding the edge of the through hole (9) of the panel (8).

3. A grommet according to one or more of the preceding claims, wherein an outer diameter of at least part of a circumferential extension of a bottom portion of the body locking recess (13) is slightly larger than an inner diameter of the through hole (9) of the panel (8).

4. A grommet according to one or more of the preceding claims, wherein the inner circumferential surface (11b) of the front side of the small-diameter tube portion (11) is so slanted as to gradually increase its diameter toward the front end, so that an inner clearance (C) to be formed between the bundle of wires (W) and the inner circumferential surface (11b) of the small-diameter tube portion (11) is gradually increased.

## Patentansprüche

1. Dichtungstülle (10), welche in ein Durchtrittsloch (9), welches in einem Paneel bzw. einer Platte (8) ausgebildet ist, in einer Einsetzrichtung (ID) einsetzbar ist, um mit dem Durchtrittloch (9) in Eingriff bringbar zu sein, während sie auf einer Verdrahtung bzw. einem Kabelbaum montiert ist, umfassend:
einen Rohrabschnitt (11) mit geringem Durchmesser, durch welchen ein Bündel von Drähten (W) in im wesentlichen unmittelbarem Kontakt eingeführt werden kann;
einen Klauen- bzw. Backenabschnitt (12);
eine einen Körper verriegelnde Vertiefung bzw. Aussparung (13), welche in einer geneigten bzw. abgeschrägten äußeren Umfangsoberfläche (12a) des Backenabschnitts (12) ausgebildet ist;
wobei der Backenabschnitt (12) in einer Rückfaltrichtung (FBD) von dem äußeren Umfang des vorderen Endes des Rohrabschnitts (11) geringen Durchmessers vorragt und der Backenabschnitt (12) wenigstens einen verdünnten Wandabschnitt (12c) umfaßt, welcher eine im wesentlichen radiale Bewegung des Backenabschnitts (12) zu dem Rohrabschnitt (11) mit geringem Durchmesser bei einem Einsetzen der Dichtungstülle (10) in das Durchtrittsloch (9) erlaubt, und
wobei ein Abschnitt bzw. Freiraum (15) zwischen dem Abschnitt (11) geringen Durchmessers und dem Backenabschnitt (12) definiert ist, wobei ein vorderer Endabschnitt (15a) des Freiraums (15) weiter vorne als die den Körper verriegelnde Vertiefung (13) in der Einsetzrichtung (ID) angeordnet ist,
**dadurch gekennzeichnet, daß**
die äußere Umfangsoberfläche (11a) des Rohrabschnitts (11) geringen Durchmessers nach außen geneigt bzw. abgeschrägt ist, so daß der Freiraum (15) zu seiner vorderen Endposition (15a) verjüngt bzw. geneigt ist.

2. Dichtungstülle nach Anspruch 1, wobei der verdünnte Wandabschnitt (12c) an einer radialen Position im wesentlichen entsprechend dem Rand bzw. der Kante des Durchtrittslochs (9) des Paneels (8) vorgesehen bzw. zur Verfügung gestellt ist.

3. Dichtungstülle nach einem oder mehreren der vorangehenden Ansprüche, wobei ein Außendurchmesser von wenigstens einem Teil einer Umfangserstreckung eines Bodenabschnitts der einen Körper verriegelnden Vertiefung (13) geringfügig größer als ein Innendurchmesser des Durchtrittslochs (9) des Paneels (8) ist.

4. Dichtungstülle nach einem oder mehreren der vorangehenden Ansprüche, wobei die innere Umfangsoberfläche (11b) der Vorderseite des Rohrabschnitts (11) geringen Durchmessers so abgeschrägt ist, um zunehmend ihren Durchmesser zu dem vorderen Ende zu erhöhen, so daß ein innerer Freiraum (C), welcher zwischen dem Bündel von Drähten (W) und der inneren Umfangsoberfläche (11b) des Rohrabschnitts (11) geringen Durchmessers auszubilden ist, zunehmend erhöht bzw. vergrößert ist.

## Revendications

1. Passe-câble (10) pouvant être inséré dans un orifice traversant (9) formé dans un panneau (8) dans une direction d'insertion (ID) destiné à venir en prise avec l'orifice traversant (9) tout en étant monté sur un faisceau de câbles, comprenant :
une partie tubulaire (11) de petit diamètre à travers laquelle un faisceau de câbles (W) peut être introduit pour venir en contact sensiblement étroit avec celle-ci ;
une partie formant mâchoire (12) ;
un évidement (13) de verrouillage de corps formé dans une surface circonférentielle extérieure (12a) inclinée de la partie formant mâchoire (12) ;
dans lequel :
la partie formant mâchoire (12) fait saillie dans une direction de repli (FBD) depuis la circonférence extérieure de l'extrémité avant de la partie tubulaire (11) de petit diamètre, et la partie formant mâchoire (12) comprend au moins une partie à paroi amincie (12c) qui permet un mouvement sensiblement radial de la partie formant mâchoire (12) vers la partie tubulaire (11) de petit diamètre au moment de l'insertion du passe-câble(10) dans l'orifice traversant (9),et
dans lequel un espace (15) est défini entre la partie (11) de petit diamètre et la partie formant mâchoire (12), une partie d'extrémité avant (15a) de l'espace (15) étant située plus à l'avant que l'évidement (13) de verrouillage de corps dans la direction d'insertion (ID)
**caractérisé en ce que** la surface circonférentielle extérieure (11a) de la partie tubulaire (11) de petit diamètre est inclinée vers l'extérieur de telle sorte que l'espace (15) s'effile vers sa partie d'extrémité avant (15a).

2. Passe-câble selon la revendication 1, dans lequel la partie à paroi amincie (12c) est prévue à une position radiale qui correspond sensiblement au bord de l'orifice traversant (9) du panneau (8).

3. Passe-câble selon l'une ou plusieurs des revendications précédentes, dans lequel le diamètre extérieur d'au moins une partie d'une extension circonférentielle d'une partie inférieure de l'évidement (13) de verrouillage de corps est légèrement plus grand que le diamètre intérieur de l'orifice traversant (9) du panneau (8).

4. Passe-câble selon l'une ou plusieurs des revendications précédentes, dans lequel la surface circonférentielle intérieure (11b) du côté avant de la partie tubulaire (11) de petit diamètre est inclinée de manière à ce que son diamètre augmente progressivement vers l'extrémité avant, de telle sorte qu'un espace intérieur (C) devant être formé entre le faisceau de câbles (W) et la surface circonférentielle intérieure (11b) de la partie tubulaire (11) de petit diamètre augmente progressivement.
